# EUROPÄISCHE PATENTSCHRIFT

(11) **EP 3 064 785 B1**
(45) Veröffentlichungstag und Bekanntmachung des Hinweises auf die Patenterteilung: **21.11.2018**
(21) Anmeldenummer: 16158677.1
(22) Anmeldetag: 04.03.2016
(51) Int. Cl.: F16B 5/02, F16B 37/12

(54) **VORRICHTUNG ZUM FESTLEGEN AN EINEM BAUTEIL**
DEVICE FOR FIXING ON A COMPONENT
DISPOSITIF DE FIXATION SUR UN COMPOSANT

(30) Priorität: 06.03.2015 DE 102015204038; 25.06.2015 DE 102015211798
(43) Veröffentlichungstag der Anmeldung: 07.09.2016
(73) Patentinhaber: Springfix Befestigungstechnik GmbH, 73084 Salach (DE)
(72) Erfinder: Bernauer, Jana, 73230 Kirchheim (DE); Gonzalez, Carlos, 89558 Böhmenkirch (DE); Ecker, Rainer, 73033 Göppingen (DE)
(74) Vertreter: Patent- und Rechtsanwälte Ullrich & Naumann

(56) Entgegenhaltungen:
- DE-A1- 10 034 968

## Beschreibung

Die Erfindung betrifft eine Vorrichtung zum Festlegen an einem Bauteil, insbesondere Toleranz-Ausgleichs-Element, mit einer Schraube, einer ersten Hülse und einer an bzw. in der ersten Hülse mittels einer Schraubverbindung festlegbaren zweiten Hülse, wobei die erste Hülse und die zweite Hülse jeweils einen Durchgang aufweisen, wobei die Schraube durch die Durchgänge und durch das Bauteil hindurch in ein Gewinde eines Haltemittels einschraubbar ist, wobei ein in dem Durchgang der zweiten Hülse angeordnetes Reibelement an der Schraube zumindest abschnittsweise anliegt und wobei sich die Drehrichtung der Schraubverbindung von der Drehrichtung des Gewindes des Haltemittels unterscheidet.

Vorrichtungen der in Rede stehenden Art sind seit Jahren aus der Praxis bekannt und dienen beispielsweise der Fixierung von zwei Bauteilen, deren Abstand zueinander schwanken kann. Entsprechende Toleranz-Ausgleichs-Elemente werden beispielsweise zur Montage von Schweinwerfern in einem Kraftfahrzeug verwendet.

Bei den bekannten Vorrichtungen wird mit dem Eindrehen der Schraube in das Gewinde des Haltemittels die zweite Hülse aufgrund des Reibelements, das die Schraube und die zweite Hülse verbindet, ebenfalls gedreht. Durch die gegensinnige Drehrichtung der Schraubverbindung und des Gewindes des Haltemittels wird mit dem Eindrehen der Schraube die zweite Hülse aus der ersten Hülse herausgeschraubt. Somit ermöglicht diese Konstruktion einen Toleranzausgleich bei der Fixierung von zwei Bauteilen, deren Abstand zueinander nicht eindeutig bestimmt ist.

Entsprechende Vorrichtungen sind beispielsweise aus der FR 2 792 039 B1 und der DE 100 34 968 A1 vorbekannt.

Während der Montage und im eingebauten Zustand wirken auf die gesamte Vorrichtung und somit auch auf die Schraubverbindung der Hülsen mitunter sehr hohe Kräfte und Drehmomente. Daher müssen die Hülsen mit einem Gewinde ausgestattet sein, das diesen Kräften und Drehmomenten genügt. Aus diesem Grund sind die aus dem Stand der Technik bekannten Hülsen aus Metall gefertigt und weisen ein entsprechend dimensioniertes Gewinde auf, so dass die Vorrichtung durch die auftretenden Kräfte und Drehmomente nicht beschädigt wird.

Aus den voranstehend genannten Gründen ist die Konstruktion und Herstellung der gattungsbildenden Vorrichtung äußerst aufwendig und somit kostenintensiv. Des Weiteren ist problematisch, dass die bekannten Vorrichtungen aufgrund des entsprechend stabil dimensionierten Gewindes äußerst groß bauen.

Der vorliegenden Erfindung liegt daher die Aufgabe zugrunde, eine Vorrichtung zum Festlegen an einem Bauteil, insbesondere ein Toleranz-Ausgleichs-Element, der eingangs genannten Art derart auszugestalten und weiterzubilden, dass mit konstruktiv einfachen Mitteln eine sichere Schraubverbindung zwischen der ersten Hülse und der zweiten Hülse realisiert ist, so dass die Vorrichtung klein baut und einfach und damit kostengünstig in der Herstellung ist.

Erfindungsgemäß wird die voranstehende Aufgabe durch die Merkmale des Anspruches 1 gelöst. Danach ist die in Rede stehende Vorrichtung zum Festlegen an einem Bauteil dadurch gekennzeichnet, dass die erste Hülse und die zweite Hülse jeweils mindestens zwei Gewinde zum gegenseitigen Eingriff der Hülsen, nämlich zum Realisieren der Schraubverbindung, aufweisen.

In erfindungsgemäßer Weise ist zunächst erkannt worden, dass die zugrunde liegende Aufgabe in verblüffend einfacher Weise dadurch gelöst werden kann, dass die Schraubverbindung der ersten Hülse und der zweiten Hülse über jeweils mindestens zwei Gewinde realisiert ist. Beispielsweise können jeweils ein Schraubengewinde (Außengewinde) einer Hülse und ein Mutterngewinde (Innengewinde) der anderen Hülse ein Gewindepaar bilden, so dass die erste Hülse und die zweite Hülse über mindestens zwei Gewindepaare miteinander verbunden sind. Die Gewinde können dabei beispielsweise als Gewinde eines Linksgewindes ausgebildet sein, so dass das Gewinde des Haltemittels als Rechtsgewinde ausgebildet ist und die Schraube in üblicher Weise in das Haltemittel eindrehbar ist. Durch diese Konstruktion verteilen sich die auf die Hülsen wirkenden Kräfte und Drehmomente auf mehrere Gewinde bzw. Gewindepaare, so dass die einzelnen Gewinde für sich gesehen einer geringeren Kraft widerstehen müssen. Dadurch ist es möglich, die Hülsen aus einer Vielzahl von Materialien herzustellen, die bisher für die Herstellung solcher Vorrichtungen nicht in Frage kamen. Des Weiteren ist erkannt worden, dass durch diese Konstruktion die gesamte Vorrichtung äußerst kompakt und klein baut, da auf ein entsprechend groß dimensioniertes Gewinde verzichtet werden kann.

Zur Realisierung einer besonders kompakten Konstruktion, die auch höheren Kräften widersteht, können die erste Hülse und die zweite Hülse jeweils drei Gewinde aufweisen. Somit verteilen sich die auf die Hülsen wirkenden Kräfte und Drehmomente auf insgesamt drei Gewinde bzw. Gewindepaare.

In vorteilhafter Weise können die Gewinde dabei einem Sägezahngewinde mit ungleichen Flankenwinkeln entsprechen. Durch die flachere Seite wird mehr Kraftanteil in die axiale Richtung gelenkt und weniger Kraftanteil in die radiale Richtung (nach aussen) gegeben, was ansonsten zu einem Sprengen der äußeren Hülse führen würde. Des Weiteren kann die flachere Seite mit 9° bis 11°, vorzugsweise mit 10°, geneigt sein, wodurch sich eine Selbstzentrierung der ersten und zweiten Hülse zueinander ergibt. Des Weiteren ist denkbar, dass die Gewinde als Sägezahngewinde mit gleichen Flankenwinkeln ausgebildet sind.

In weiter vorteilhafter Weise können die erste Hülse und die zweite Hülse aus einem thermoplastischen Kunststoff, beispielsweise im Spritzgussverfahren hergestellt sein. Der thermoplastische Kunststoff kann dabei einen Glasfasergehalt von 30% oder von 50% bis 70%, vorzugsweise 60%, aufweisen und auf Basis von Polyphthalamid (PPA) oder Polyamid (PA) oder Polybutylenterephthalat (PBT) oder Polyethylenterephthalat (PET) hergestellt sein. Dabei kann es sich um modifiziertes PPA bzw. um modifiziertes PA handeln. Insbesondere ein Glasfasergehalt von 30 % zeichnet sich durch äußerst geringe Materialkosten aus. Dabei kann der thermoplastische Kunststoff in idealer Weise derart gewählt sein, dass eine gute Haftung mit einem thermoplastischen Elastomer gewährleistet ist. Durch die Realisierung von mehreren Gewinden in den Hülsen und die Herstellung der Hülsen aus thermoplastischem Kunststoff ist die Vorrichtung besonders kompakt und stabil ausgebildet und dabei kostengünstig in der Herstellung.

In weiter vorteilhafter Weise kann das Reibelement an dem der ersten Hülse zugewandten Ende des Durchgangs der zweiten Hülse ausgebildet sein. Somit ist die Schraube beim Einbringen zunächst durch den Durchgang der zweiten Hülse geführt, so dass insbesondere bei der Montage am Band die Schraube in besonders einfacher Weise in die Vorrichtung einbringbar ist.

Weiterhin kann das Reibelement in den Durchgang hineinragende Segmente aufweisen. Die Segmente können entsprechend den Anforderungen bezüglich Einsteckkraft, Demontagekraft und Reibmoment ausgebildet sein, beispielsweise konvex, konkav oder gerade. Je nachdem, wie groß die Fläche und der Anpreßdruck ist, mit der das Reibelement an der Schraube anliegt, ist die von dem Reibelement ausgeübte Hemmung definiert. Dabei ist des Weiteren denkbar, dass das Reibelement insgesamt ringförmig ausgebildet ist und der gesamte Ring und nicht nur ein Segment davon an der Schraube anliegt.

Um die Herstellungskosten weiter zu minimieren, kann das Reibelement aus thermoplastischem Kunststoff oder thermoplastischem Polyurethan, insbesondere im Spritzgussverfahren, hergestellt sein. Dabei ist des Weiteren denkbar, dass sowohl die zweite Hülse als auch die erste Hülse im Spritzgussverfahren hergestellt sind, wobei das Reibelement im Zwei-Komponenten-Spritzguss an der zweiten Hülse angebracht ist. Unabhängig davon, ob das Reibelement als einzelnes Bauteil oder im Zwei-Komponenten-Spritzgussverfahren zusammen mit der zweiten Hülse hergestellt ist, kann durch geeignete Wahl des Elastomers und die Anpassung der Geometrie des Reibelements die Kraft definiert werden, mit der das Reibelement auf die Schraube einwirkt.

In besonders vorteilhafter Weise kann die erste Hülse einen Anlagebereich zum Anlegen an das Bauteil aufweisen. Insbesondere wenn in dem Bauteil ein Langloch oder ein Schlüsselloch ausgebildet ist, durch das die Schraube hindurchgeführt wird, wirken Biegekräfte auf den Anlagebereich, so dass dieser entsprechend dick ausgeführt sein muss. Dabei ist des Weiteren denkbar, dass der Anlagebereich aus einem hochfesten Kunststoff mit versteifenden Füllstoffen ausgebildet ist.

Um eine besonders langlebige Konstruktion zu erzielen, kann an dem Anlagebereich ein Metallelement zur großflächigen Druckverteilung bzw. Reduzierung der Flächenpressung angeordnet sein. Dabei kann es sich beispielsweise um ein Stanzteil, ein Tiefziehteil oder ein Druckgussteil handeln. Das Metallelement kann im Zuge der Herstellung der ersten Hülse im Spritzgussverfahren von dem Kunststoff umspritzt sein. Des Weiteren ist denkbar, dass das Metallelement - beispielsweise adhäsiv - an dem Anlagebereich festgelegt ist.

In besonders vorteilhafter Weise kann das Metallelement als Tellerfeder ausgebildet sein. Durch diese Ausgestaltung ist eine angenähert konstante Federkraft über den Weg hinweg erzeugt, so dass das Kriechverhalten des Materials der Vorrichtung über die Zeit hinweg kompensierbar ist und somit einem Setzverhalten der Vorrichtung entgegengewirkt ist.

Zur Realisierung einer besonders einfach herzustellenden Konstruktion kann das Haltemittel einstückig mit der ersten Hülse ausgebildet sein. Bei dem Haltemittel kann es sich beispielsweise um eine Mutter handeln. Des Weiteren ist denkbar, dass der Anlagebereich der ersten Hülse sowie das Haltemittel - die Mutter - derart ausgebildet sind, dass sie jeweils zumindest einen Teil des Schenkels eines Clips bilden, der an das Bauteil anclipbar ist.

In weiter vorteilhafter Weise kann das Haltemittel - die Mutter - aus Metall, insbesondere aus Blech mit einem Gewindedurchzug, hergestellt sein. Durch die Anordnung eines metallischen Haltemittels können die benötigten Kräfte über ein besonders kleines Gewinde übertragen werden. Insbesondere bei der Befestigung eines Scheinwerfers in einem Kraftfahrzeug, muss zur Verminderung der Flächenpressung die Fläche des Haltemittels vergrößert werden, da die zu befestigenden Scheinwerfer oftmals aus einem Kunststoff gefertigt sind, der nur geringfügig druckfest ist. In einem solchen Fall sind großflächige Haltemittel aus Blech mit Gewindedurchzug von besonderem Vorteil, wobei zur Erhöhung der Tragfähigkeit die Gewindestelle verdickt sein kann. An das metallische Haltemittel kann eine Verbindung mit der ersten Hülse angeformt sein. Des Weiteren ist denkbar, dass die erste Hülse und das Haltemittel - als Mutter ausgebildet -jeweils in einem Schenkel eines metallischen Clips angeordnet sind.

Um eine besonders kostengünstige Konstruktion zu realisieren, kann das Gewinde des Haltemittels als Durchzug mit angequetschter Klemmung ausgebildet sein. Diese Konstruktion zeichnet sich des Weiteren durch eine hohe Tragkraft aus. Ferner wirkt eine solche Klemmung "weicher" als eine klemmende Vollmutter und nimmt dadurch weniger und vor allem definierter ein Teil-Drehmoment der Verschraubung auf. Dabei genügt die Klemmung, um ein Lösen der Verschraubung nach einem zu starken Setzen der Vorrichtung auf Dauer zu verhindern. Um zu vermeiden, dass bei der Montage Bandstörungen durch Kreuzverschraubung auftreten, d. h. die Schraube das Gewinde des Halteelements nicht "findet", kann durch geeignete Vorzüge und Stauchungen im Umformprozess eine Materialverdickung nach "innen" geschaffen sein, mit der der Gewindeformer mindestens im ersten Gang eine annähernd volle Gewindehöhe ausformen muss. Der Rest der Gewindegänge kann in üblicher Weise verdünnt ausgestaltet sein, um den Gewindeformer zu schonen. Dadurch ist gegenüber der Schraubenspitze eine Einschraubsicherheit gewährleistet, wie sie bei einer geschnittenen Vollmetallmutter auftritt. Durch die Materialaufstauchung bzw. Materialverdickung nach innen - bis zum Schrauben-Gewindekerndurchmesser - wird beim späteren Gewindeformen die Gewindespitze nahezu vollständig spitz ausgebildet und dadurch Einschraubprobleme und Topfabriss effektiv vermieden. Des Weiteren wird durch die kurze Länge - bspw. ein Gang - Material gespart und der Gewindeformer geschont. Ferner ist denkbar, dass als Haltemittel eine in dem Bauteil vormontierte Sackloch-Einsteckmutter angeordnet ist. Eine solche Konstruktion eignet sich insbesondere dann, wenn keine Befestigung am Rand des Bauteils benötigt wird.

In weiter vorteilhafter Weise kann an dem Anlagebereich eine Ausnehmung und an der zweiten Hülse ein Sicherheitselement als Verdrehsicherung ausgebildet sein, wobei das Sicherheitselement zumindest bei vollständig ineinander verschraubten Hülsen in die Ausnehmung hineinragt. Durch diese konstruktive Maßnahme kann die Vorrichtung in einem Soll-Lieferzustand gehalten werden, bei dem die Hülsen zumindest nahezu vollständig ineinander verschraubt sind. Je nach geometrischer Ausgestaltung und Material kann die Kraft definiert werden, die zum Überwinden der Verdrehsicherung aufgebracht werden muss. Bei der voranstehend genannten Konstruktion ist des Weiteren vorteilhaft, dass die Verdrehsicherung nicht außerhalb der Vorrichtung, sondern im geschützten, inneren Bereich angeordnet ist. Dadurch wird zum einen Bauraum eingespart und des Weiteren die Verdrehsicherung vor Beschädigungen geschützt.

In besonders raffinierter Weise kann das Sicherheitselement als integraler Bestandteil des Reibelements ausgebildet sein, beispielsweise als Verlängerung des Reibelements in axialer oder radialer Richtung. Wesentlich ist hierbei lediglich, dass das Sicherheitselement in die Ausnehmung der ersten Hülse hineinragt und somit eine Verdrehung der Hülsen gegeneinander hemmt.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung einen Schnitt durch die erste und zweite Hülse einer erfindungsgemäßen Vorrichtung,
- Fig. 2: in einer perspektivischen Darstellung die erste und zweite Hülse aus Fig. 1
- Fig. 3: in einer Aufsicht die erste und zweite Hülse aus Fig. 1.

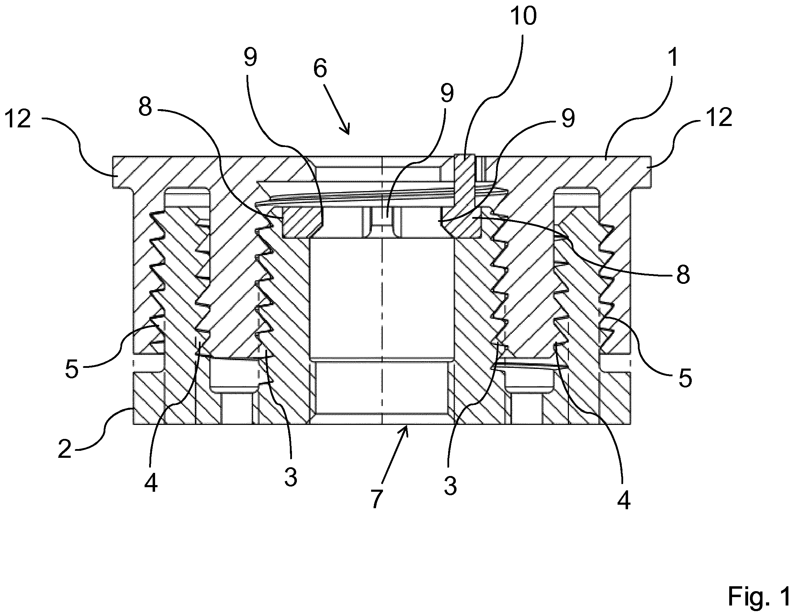

Fig. 1 zeigt in einer schematischen Darstellung einen Schnitt durch die erste Hülse 1 und die zweite Hülse 2 einer erfindungsgemäßen Vorrichtung. Die zweite Hülse 2 ist in dieser Darstellung vollständig in die erste Hülse 1 eingeschraubt. Zur Realisierung der Schraubverbindung weisen sowohl die erste Hülse 1 als auch die zweite Hülse 2 jeweils ein erstes Gewinde 3, ein zweites Gewinde 4 und ein drittes Gewinde 5 auf. Folglich sind insgesamt drei Gewindepaare realisiert. Durch die Ausbildung von jeweils drei Gewinden 3, 4, 5, über welche die erste Hülse 1 mit der zweiten Hülse 2 verbindbar ist, werden die auf die Hülsen 1, 2 und somit auf die Gewinde 3, 4, 5 wirkenden Kräfte und Drehmomente in idealer Weise verteilt. Dadurch ist die Vorrichtung insgesamt sehr kompakt und es ist möglich, die erste Hülse 1 und die zweite Hülse 2 aus einem Kunststoff herzustellen. Die Herstellung der ersten und zweiten Hülse 1, 2 kann beispielsweise im Spritzgussverfahren erfolgen.

Des Weiteren ist in Fig. 1 dargestellt, dass die erste Hülse 1 einen Durchgang 6 und die zweite Hülse 2 einen Durchgang 7 aufweisen. Dabei können die Durchgänge 6, 7 derart dimensioniert sein, dass eine M6 Schraube durch diese hindurchführbar ist. Weiterhin können das erste Gewinde 3 der ersten Hülse 1 und der zweiten Hülse 2 als 12 x 1,25 LH, das zweite Gewinde 4 der ersten Hülse 1 und der zweiten Hülse 2 als 18 x 1,25 LH und das dritte Gewinde 4 der ersten Hülse 1 und der zweiten Hülse 2 als 21 x 1,25 LH ausgebildet sein.

In dem Durchgang 7 der zweiten Hülse 2 ist das Reibelement 8 angeordnet. Das Reibelement 8 kann aus einem thermoplastischen Elastomer ausgebildet sein und zusammen mit der zweiten Hülse 2 im Zwei-Komponenten-Spritzgussverfahren hergestellt sein. Im hier dargestellten Ausführungsbeispiels ist das Reibelement 8 ringförmig ausgebildet und weist Segmente 9 auf, die in den Durchgang 7 hineinragen und an der Schraube anliegen, wenn diese in die Durchgänge 6, 7 eingeführt ist.

An dem Reibelement 8 ist des Weiteren ein Sicherheitselement 10 ausgebildet, das in eine nicht dargestellt Ausnehmung 11 der ersten Hülse 1 hineinragt und somit ein Verdrehen der Hülsen 1, 2 gegeneinander hemmt, zumindest wenn die Hülsen 1,2 vollständig bzw. nahezu vollständig ineinander verschraubt sind, sog. Soll-Lieferzustand.

An dieser Stelle sei darauf hingewiesen, dass die erste Hülse 1 an einem ersten Schenkel eines Clips festgelegt sein kann, beispielsweise über die Vorsprünge 12. An dem zweiten Schenkel des Clips kann ein Haltemittel angeordnet sein, beispielsweise eine Mutter. Zum Festlegen dieser Vorrichtung an einem Bauteil kann der Clip über das Bauteil geschoben werden, so dass die Durchgänge 6, 7 mit einer Ausnehmung in dem Bauteil fluchten. Durch die Durchgänge 6, 7 und das Bauteil wird eine Schraube in das Gewinde des Haltemittels eingeschraubt. Da die Drehrichtungen der Gewinde 3, 4, 5 der ersten Hülse 1,2 und die Drehrichtung des Gewindes des Haltemittels entgegengesetzt verlaufen, wird die zweite Hülse 2 beim Eindrehen der Schraube in das Haltemittel aus der ersten Hülse 1 herausgeschraubt, da nämlich die zweite Hülse 2 durch das an der Schraube anliegende Reibelement 8 gedreht wird.

Somit muss das Reibelement 8 derart an der Schraube anliegen, dass von der Schraube ein ausreichend großes Drehmoment auf die zweite Hülse 2 übertragbar ist, so dass die zweite Hülse 2 aus der ersten Hülse 1 herausschraubbar ist.

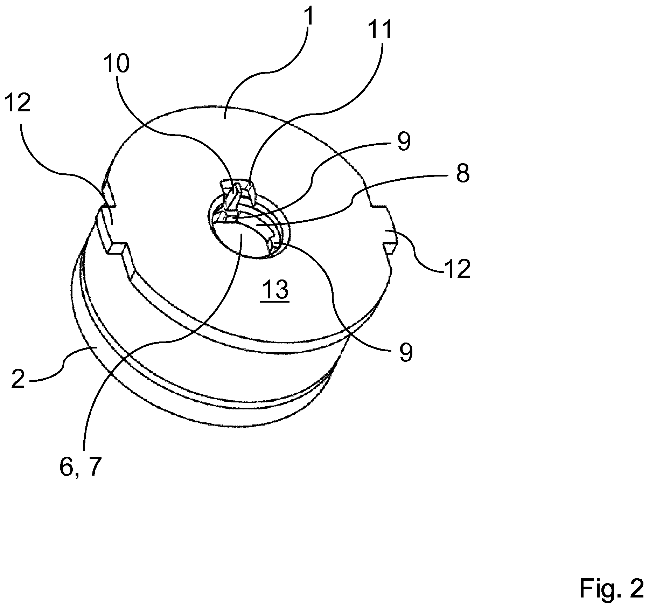

Fig. 2 zeigt in einer perspektivischen Darstellung die erste und zweite Hülse 1, 2 aus Fig. 1. Dabei ist deutlich zu erkennen, dass an der ersten Hülse 1 ein Anlagebereich 13 zum Anlegen an das Bauteil ausgebildet ist. In dem Anlagebereich 13 ist eine Ausnehmung 11 ausgebildet, in welcher das Sicherheitselement 10 angeordnet ist. Das Sicherheitselement 10 erstreckt sich derart in die Ausnehmung 11 hinein, dass ein versehentliches Verdrehen der Hülsen 1, 2 gegeneinander verhindert ist. Durch das beim Eindrehen der Schraube in das Gewinde des Haltemittels auftretende Drehmoment wird das Sicherheitselement 10 derart elastisch verbogen, dass die Hülsen 1, 2 gegeneinander verdreht werden. Folglich dient das Sicherheitselement 10 lediglich dazu, die Vorrichtung im gewünschten Soll-Lieferzustand zu halten. Im Soll-Lieferzustand ist die zweite Hülse 2 nahezu vollständig in die erste Hülse 1 eingeschraubt.

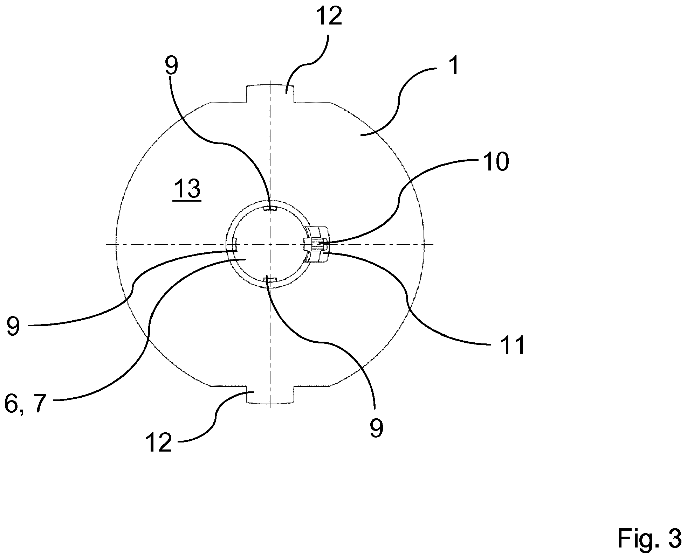

Fig. 3 zeigt in einer Aufsicht die erste und zweite Hülse 1, 2 aus Fig. 1. Daher sei an dieser Stelle auf die Beschreibung der Fig. 1 und 2 verwiesen.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: erste Hülse
- 2: zweite Hülse
- 3: erstes Gewinde
- 4: zweites Gewinde
- 5: drittes Gewinde
- 6: Durchgang (erste Hülse)
- 7: Durchgang (zweite Hülse)
- 8: Reibelement
- 9: Segment
- 10: Sicherheitselement
- 11: Ausnehmung
- 12: Vorsprung
- 13: Anlagebereich

## Patentansprüche

1. Vorrichtung zum Festlegen an einem Bauteil, insbesondere Toleranz-Ausgleichs-Element, mit einer Schraube, einer ersten Hülse (1) und einer an bzw. in der ersten Hülse (1) mittels einer Schraubverbindung festlegbaren zweiten Hülse (2), wobei die erste Hülse (1) und die zweite Hülse (2) jeweils einen Durchgang (6, 7) aufweisen, wobei die Schraube durch die Durchgänge (6, 7) und durch das Bauteil hindurch in ein Gewinde eines Haltemittels einschraubbar ist, wobei ein in dem Durchgang (7) der zweiten Hülse (2) angeordnetes Reibelement (8) an der Schraube zumindest abschnittsweise anliegt und wobei sich die Drehrichtung der Schraubverbindung von der Drehrichtung des Gewindes des Haltemittels unterscheidet,
**dadurch gekennzeichnet, dass** die erste Hülse (1) und die zweite Hülse (2) jeweils mindestens zwei Gewinde (3, 4, 5) zum gegenseitigen Eingriff der Hülsen (1, 2), nämlich zum Realisieren der Schraubverbindung, aufweisen.

2. Vorrichtung nach Anspruch 1, **dadurch gekennzeichnet, dass** die erste Hülse (1) und die zweite Hülse (2) jeweils drei Gewinde (3, 4, 5) aufweisen.

3. Vorrichtung nach Anspruch 1 oder 2, **dadurch gekennzeichnet, dass** die Gewinde (3, 4, 5) einem Sägezahngewinde mit ungleichen oder gleichen Flankenwinkeln entsprechen.

4. Vorrichtung nach einem der Ansprüche 1 bis 3, **dadurch gekennzeichnet, dass** die erste Hülse (1) und die zweite Hülse (2) aus thermoplastischem Kunststoff, insbesondere mit einem Glasfasergehalt von 30 % oder von 50 % bis 70 %, vorzugsweise auf Basis von Polyphthalamid (PPA) oder Polyamid (PA) oder Polybutylenterephthalat (PBT) oder Polyethylenterephthalat (PET), hergestellt sind.

5. Vorrichtung nach einem der Ansprüche 1 bis 4, **dadurch gekennzeichnet, dass** das Reibelement (8) an dem der ersten Hülse (1) zugewandten Ende des Durchgangs (7) der zweiten Hülse (2) ausgebildet ist.

6. Vorrichtung nach einem der Ansprüche 1 bis 5, **dadurch gekennzeichnet, dass** das Reibelement (8) in den Durchgang (7) hineinragende Segmente (9) aufweist.

7. Vorrichtung nach einem der Ansprüche 1 bis 6, **dadurch gekennzeichnet, dass** das Reibelement (8) aus thermoplastischem Elastomer oder thermoplastischem Polyurethan, insbesondere im 2K-Spritzgussverfahren, hergestellt ist.

8. Vorrichtung nach einem der Ansprüche 1 bis 7, **dadurch gekennzeichnet, dass** die erste Hülse (1) einen Anlagebereich (13) zum Anlegen an das Bauteil aufweist.

9. Vorrichtung nach Anspruch 8, **dadurch gekennzeichnet, dass** an dem Anlagebereich (13) ein Metallelement, insbesondere ein Stanzteil, Tiefziehteil oder Druckgussteil, zur Reduzierung der Flächenpressung angeordnet ist, wobei das Metallelement als Tellerfeder ausgebildet sein kann.

10. Vorrichtung nach einem der Ansprüche 1 bis 9, **dadurch gekennzeichnet, dass** das Haltemittel, insbesondere als Mutter, einstückig mit der ersten Hülse (1) ausgebildet ist.

11. Vorrichtung nach einem der Ansprüche 1 bis 10, **dadurch gekennzeichnet, dass** das Haltemittel, vorzugsweise als Mutter, aus Metall, insbesondere aus Blech mit Gewindedurchzug, hergestellt ist.

12. Vorrichtung nach Anspruch 11, **dadurch gekennzeichnet, dass** der Gewindedurchzug zur Erzeugung eines vollgeschnittenen Gewindeeinlaufs eine Materialverdickung nach innen, insbesondere bis zum Schrauben-Gewindekerndurchmesser, aufweist.

13. Vorrichtung nach einem der Ansprüche 1 bis 12, **dadurch gekennzeichnet, dass** das Gewinde des Haltemittels als Durchzug mit angequetschter Klemmung ausgebildet ist.

14. Vorrichtung nach einem der Ansprüche 1 bis 13, **dadurch gekennzeichnet, dass** an dem Anlagebereich (13) eine Ausnehmung (11) ausgebildet ist, dass an der zweiten Hülse (2) ein Sicherheitselement (10) als Verdrehsicherung ausgebildet ist und dass das Sicherheitselement zumindest bei vollständig ineinander verschraubter erster Hülse (1) und zweiter Hülse (2) in die Ausnehmung (11) hineinragt.

15. Vorrichtung nach Anspruch 14, **dadurch gekennzeichnet, dass** das Sicherheitselement (10) als integraler Bestandteil des Reibelements (8) ausgebildet ist.

## Claims

1. Device for securing to a component, in particular a tolerance compensation element, having a screw, a first sleeve (1) and a second sleeve (2) which can be secured to or in the first sleeve (1) by means of a screw connection, wherein the first sleeve (1) and the second sleeve (2) each have a passage (6, 7), wherein the screw can be screwed through the passages (6, 7) and the component into a thread of a retention means, wherein a friction element (8) which is arranged in the passage (7) of the second sleeve (2) is at least partially in abutment with the screw, and wherein the rotation direction of the screw connection differs from the rotation direction of the thread of the retention means, **characterised in that** the first sleeve (1) and the second sleeve (2) each have at least two threads (3, 4, 5) for mutual engagement of the sleeves (1, 2), that is to say, for producing the screw connection.

2. Device according to claim 1, **characterised in that** the first sleeve (1) and the second sleeve (2) each have three threads (3, 4, 5).

3. Device according to claim 1 or 2, **characterised in that** the threads (3, 4, 5) correspond to a buttress thread with non-identical or identical flank angles.

4. Device according to any one of claims 1 to 3, **characterised in that** the first sleeve (1) and the second sleeve (2) are produced from thermoplastic plastics material, in particular with a glass fibre content of 30% or from 50% to 70%, preferably on the basis of polyphthalamide (PPA) or polyamide (PA) or polybutyleneterephthalate (PBT) or polyethyleneterephthalate (PET).

5. Device according to any one of claims 1 to 4, **characterised in that** the friction element (8) is constructed at the end of the passage (7) of the second sleeve (2), which end is facing the first sleeve (1).

6. Device according to any one of claims 1 to 5, **characterised in that** the friction element (8) has segments (9) which protrude into the passage (7).

7. Device according to any one of claims 1 to 6, **characterised in that** the friction element (8) is produced from thermoplastic elastomer material, or thermoplastic polyurethane, in particular with a 2K injection-moulding method.

8. Device according to any one of claims 1 to 7, **characterised in that** the first sleeve (1) has an abutment region (13) for positioning against the component.

9. Device according to claim 8, **characterised in that** on the abutment region (13) a metal element, in particular a punched component, deep-drawn component or die-cast component, is arranged in order to reduce the surface pressure, wherein the metal element may be constructed as a plate spring.

10. Device according to any one of claims 1 to 9, **characterised in that** the retention means is constructed integrally with the first sleeve (1), in particular as a nut.

11. Device according to any one of claims 1 to 10, **characterised in that** the retention means is preferably produced as a nut, from metal, in particular from sheet metal with an extruded hole.

12. Device according to claim 11, **characterised in that** the extruded hole in order to produce a fully cut thread run-in has a material thickening in an inward direction, in particular as far as the screw thread core diameter.

13. Device according to any one of claims 1 to 12, **characterised in that** the thread of the retention means is constructed as an extruded hole with compressed clamping.

14. Device according to any one of claims 1 to 13, **characterised in that** a recess (11) is formed in the abutment region (13), **in that** on the second sleeve (2) a safety element (10) is formed as a torsion prevention means and **in that** the safety element at least when the first sleeve (1) and second sleeve (2) are completely screwed one in the other protrudes into the recess (11).

15. Device according to claim 14, **characterised in that** the safety element (10) is constructed as an integral component of the friction element (8).

## Revendications

1. Dispositif de fixation sur un composant, plus particulièrement un élément de compensation de tolérance, avec une vis, d'un premier manchon (1) et d'un deuxième manchon (2), pouvant être fixé sur ou dans le premier manchon (1) au moyen d'une liaison par vissage, le premier manchon (1) et le deuxième manchon (2) présentant chacun un passage (6, 7), la vis pouvant être vissée à travers les passages (6, 7) et à travers le composant dans un filetage d'un moyen de maintien, un élément de friction (8) disposé dans le passage (7) du deuxième manchon (2) s'appuyant contre la vis au moins à certains endroits et le sens de rotation de la liaison par vissage étant différent du sens de rotation du filetage du moyen de maintien,
**caractérisé en ce que** le premier manchon (1) et le deuxième manchon (2) comprennent chacun au moins deux filetages (3, 4, 5) pour un emboîtement des manchons (1, 2) entre eux afin de réaliser la liaison par vissage.

2. Dispositif selon la revendication 1, **caractérisé en ce que** le premier manchon (1) et le deuxième manchon (2) présentent chacun trois filetages (3, 4, 5).

3. Dispositif selon la revendication 1 ou 2, **caractérisé en ce que** les filetages (3, 4, 5) correspondent à un filetage en dents de scie avec des angles de flancs différents ou identiques.

4. Dispositif selon l'une des revendications 1 à 3, **caractérisé en ce que** le premier manchon (1) et le deuxième manchon (2) sont constitués d'une matière plastique thermoplastique, plus particulièrement avec une teneur en fibres de verre de 30 % ou de 50 % à 70 %, de préférence à base de polyphtalamide (PPA) ou de polyamide (PA) ou de polybutylène-téréphtalate (PBT) ou de polyéthylène-téréphtalate (PET).

5. Dispositif selon l'une des revendications 1 à 5, **caractérisé en ce que** l'élément de friction (8) est réalisé au niveau de l'extrémité du passage (7) du deuxième manchon (2) orientée vers le premier manchon (1).

6. Dispositif selon l'une des revendications 1 à 5, **caractérisé en ce que** l'élément de friction (8) comprend des segments (9) dépassant dans le passage (7).

7. Dispositif selon l'une des revendications 1 à 6, **caractérisé en ce que** l'élément de friction (8) est constitué d'un élastomère thermoplastique ou d'un polyuréthane thermoplastique, plus particulièrement à l'aide d'un procédé d'injection 2K.

8. Dispositif selon l'une des revendications 1 à 7, **caractérisé en ce que** le premier manchon (1) comprend une zone d'appui (13) pour un appui contre le composant.

9. Dispositif selon la revendication 8, **caractérisé en ce que**, sur la zone d'appui (13), est disposé un élément métallique, plus particulièrement une pièce estampée, une pièce emboutie ou une pièce en fonte, pour la réduction de la pression superficielle, l'élément métallique pouvant être conçu comme un ressort à lames.

10. Dispositif selon l'une des revendications 1 à 9, **caractérisé en ce que** le moyen de maintien est réalisé d'une seule pièce avec le premier manchon (1), plus particulièrement sous la forme d'un écrou.

11. Dispositif selon l'une des revendications 1 à 10, **caractérisé en ce que** le moyen de maintien, de préférence sous la forme d'un écrou, est constitué d'un métal, plus particulièrement de tôle avec un passage de filets.

12. Dispositif selon la revendication 11, **caractérisé en ce que** le passage de filets comprend, pour la réalisation d'une entrée de filet découpée intégralement, un épaississement de matière vers l'intérieur, plus particulièrement jusqu'au diamètre de noyau de filetage de la vis.

13. Dispositif selon l'une des revendications 1 à 12, **caractérisé en ce que** le filetage du moyen de maintien est conçu comme un passage avec serrage comprimé.

14. Dispositif selon l'une des revendications 1 à 13, **caractérisé en ce que**, sur la zone d'appui (13), est prévue un évidement (11), **en ce que**, sur le deuxième manchon (2) un élément de sécurité (10) est conçu comme une protection anti-rotation et **en ce que** l'élément de sécurité dépasse dans l'évidement (11) au moins lorsque le premier manchon (1) et le deuxième manchon (2) sont entièrement vissés l'un dans l'autre.

15. Dispositif selon la revendication 14, **caractérisé en ce que** l'élément de sécurité (10) est conçu comme faisant partie intégrante de l'élément de friction (8).
